# EUROPEAN PATENT APPLICATION

(11) **EP 4 518 138 A1**
(43) Date of publication of application: **05.03.2025**
(21) Application number: 24197726.3
(22) Date of filing: 30.08.2024
(51) Int. Cl.: H02M 7/5387, H02M 1/088, H02M 5/293, H02M 7/48, H02M 3/335

(54) **POWER CONVERTER AND CONTROL METHOD**

(30) Priority: 31.08.2023 CN 202311137110
(71) Applicant: Huawei Digital Power Technologies Co., Ltd., Shenzhen, Guangdong 518043 (CN)
(72) Inventor: Rong, Xianliang, Shenzhen, 518043 (CN); Xin, Kai, Shenzhen, 518043 (CN); Wang, Zhuangzhi, Shenzhen, 518043 (CN)
(74) Representative: Gill Jennings & Every LLP

(57) **Abstract**

This application provides a power converter and a control method. The power converter provided in this application generates, based on phase shift information and pulse-width information, a corresponding phase shift signal including the phase shift information and a corresponding pulse-width signal including the pulse-width information, generates a switching transistor PWM signal based on the phase shift signal and the pulse-width signal, and generates, based on the switching transistor PWM signal, a drive signal used to control a switching transistor to be turned on or off, to implement decoupling control of a pulse width and a phase shift, improve a degree of freedom of waveform control of the switching transistor PWM signal, and implement flexible electric energy conversion.

## Description

### TECHNICAL FIELD

This application relates to the field of power electronics technologies, and in particular, to a power converter and a control method.

### BACKGROUND

As an electric energy conversion apparatus, a bridge converter may implement an electric energy conversion function by turning on and turning off a switching transistor on a bridge arm of the bridge converter. A drive waveform used to control the switching transistor on the bridge arm needs to be generated, to control the switching transistor on the bridge arm to be turned on and off.

In a method for generating the drive waveform used to control the switching transistor on the bridge arm, phase shift information of the switching transistor is first obtained, a phase shift signal including the phase shift information is generated based on a carrier and a phase shift indicated by the phase shift information, a corresponding switching transistor PWM signal is generated based on a rising edge and a falling edge of the phase shift signal, and a drive signal of the switching transistor is generated by using the switching transistor PWM signal.

However, when the drive waveform generated by using the foregoing method is used to control the switching transistor on the bridge arm to be turned on and off, electric energy conversion of the bridge converter may fail.

### SUMMARY

This application provides a power converter and a control method, to improve a degree of freedom of control of a switching transistor PWM signal, implement flexible electric energy conversion, and reduce costs of sending a PWM driver gating signal.

According to a first aspect, this application provides a power converter. The power converter includes a power conversion circuit and a controller.

The power conversion circuit includes at least one power switching transistor.

The controller is configured to generate a switching transistor PWM signal that controls at least one switching transistor. The controller includes a microcontroller MCU and a signal parser.

The MCU is configured to: generate a phase shift signal based on phase shift information and a carrier, where a carrier generator in the MCU generates the carrier based on a switching frequency of a switching transistor, the phase shift information indicates a phase difference between drive signals of different switching transistors, when the phase difference, that is, a value corresponding to a phase shift, indicated by the phase shift information is greater than or equal to a carrier count value, a level of the phase shift signal is set to high, otherwise, the level of the phase shift signal is set to low, and a pulse-width length of the phase shift signal is equal to a length of the phase difference indicated by the phase shift information; and generate a pulse-width signal based on pulse-width information and the carrier, where the pulse-width information indicates a pulse width of a drive signal of the switching transistor, a value corresponding to the pulse width indicated by the pulse-width information is greater than or equal to the carrier count value, a level of the pulse-width signal is set to high, otherwise, the level of the pulse-width signal is set to low, and a pulse-width length of the pulse-width signal is equal to a pulse-width length indicated by the pulse width information.

The signal parser is configured to: receive the phase shift signal and the pulse-width signal that are sent by the MCU, generate a rising edge of a pulse of the switching transistor PWM signal at a rising edge of a pulse of the phase shift signal or at a falling edge of the pulse of the phase shift signal, and generate a pulse-width length of the switching transistor PWM signal based on the pulse-width length of the pulse-width signal, where the pulse-width length of the switching transistor PWM signal is equal to the pulse-width length of the pulse-width signal, and the switching transistor PWM signal is used to generate a drive signal that controls the switching transistor to be turned on or off.

In the power converter, the MCU divides, based on the phase shift information and the pulse-width information, a control signal that is used to control generation of the drive signal into the phase shift signal and the pulse-width signal, to implement decoupling control of the pulse width and the phase shift and improve a degree of freedom of waveform control of the drive signal.

In some implementations, generating the rising edge of the pulse of the switching transistor PWM signal at a same moment of the rising edge of the pulse of the phase shift signal or at a same moment of the falling edge of the pulse of the phase shift signal includes: in a same cycle, when a level status of the phase shift signal changes from a low level to a high level, a level status of the switching transistor PWM signal changes from a low level to a high level; or when a level status of the phase shift signal changes from a high level to a low level, a level status of the switching transistor PWM signal changes from a low level to a high level.

The generating a pulse-width length of the switching transistor PWM signal based on the pulse-width length of the pulse-width signal, where the pulse-width length of the switching transistor PWM signal is equal to the pulse-width length of the pulse-width signal includes: in a same cycle, when high-level duration of the switching transistor PWM signal is equal to the pulse-width length of the pulse-width signal, the level status of the switching transistor PWM signal changes from the high level to the low level.

In some implementations, the power converter includes a first switching transistor, a second switching transistor, a third switching transistor, and a fourth switching transistor.

A drain of the first switching transistor is connected to both an output end of a direct current power supply and a drain of the third switching transistor. A source of the first switching transistor is connected to a drain of the second switching transistor, a source of the third switching transistor, and a drain of the fourth switching transistor. A source of the second switching transistor and a source of the fourth switching transistor are connected to an input end of the direct current power supply.

The MCU is specifically configured to: generate a first phase shift signal based on a first phase shift and a first carrier, where the first phase shift is a phase difference between a drive signal of the first switching transistor and a drive signal of the fourth switching transistor, when a first phase shift value is greater than or equal to a first carrier count value, a level of the first phase shift signal is set to high, otherwise, the level of the first phase shift signal is set to low, and a pulse-width length of the first phase shift signal is equal to a length of the first phase shift; and generate a first pulse-width signal based on a first pulse width and the first carrier, where the first pulse width is a pulse width of the drive signal of the first switching transistor, when a first pulse-width value is greater than or equal to the first carrier count value, a level of the first pulse-width signal is set to high, otherwise, the level of the first pulse-width signal is set to low, and a pulse-width length of the first pulse-width signal is equal to a length of the first pulse width.

The signal parser is specifically configured to: receive the first phase shift signal and the first pulse-width signal that are sent by the MCU; generate a rising edge of a pulse of a first switching transistor PWM signal at a rising edge of a pulse of the first phase shift signal, and generate a falling edge of the pulse of the first switching transistor PWM signal when a pulse width of the first switching transistor PWM signal is equal to a pulse width of the first pulse-width signal, where the first switching transistor PWM signal is used to generate a drive signal that controls the first switching transistor to be turned on or off; and generate a rising edge of a pulse of a fourth switching transistor PWM signal at a falling edge of the pulse of the first phase shift signal, and generate a falling edge of the pulse of the fourth switching transistor PWM signal when a pulse width of the fourth switching transistor PWM signal is equal to the pulse width of the first pulse-width signal, where the fourth switching transistor PWM signal is used to generate a drive signal that controls the fourth switching transistor to be turned on or off.

A frequency of the first carrier is set to a turn-on frequency of a switching transistor in a primary-side full-bridge converter. A control signal generated based on the carrier can indicate the turn-on frequency of the switching transistor, to ensure that a frequency of a switching transistor drive signal generated based on the switching transistor PWM signal is consistent with the turn-on frequency of the switching transistor.

In some implementations, the power converter is a dual-active bridge DAB converter, the DAB converter includes a primary-side full-bridge converter and a transformer, and the primary-side full-bridge converter includes a first inductor, a first capacitor, the first switching transistor, the second switching transistor, the third switching transistor, and the fourth switching transistor.

A first end of the first inductor is configured to connect to the output end of the direct current power supply. A second end of the first inductor is connected to a first end of the first capacitor, the drain of the first switching transistor, and the drain of the third switching transistor. A second end of the first capacitor is connected to the input end of the direct current power supply. A first end of a primary-side winding of the transformer is connected to the source of the first switching transistor and the drain of the second switching transistor. A second end of the primary-side winding of the transformer is connected to the source of the third switching transistor and the drain of the fourth switching transistor.

The signal parser is further configured to:
generate a second switching transistor PWM signal based on the first switching transistor PWM signal, where a level status of the second switching transistor PWM signal is opposite to a level status of the first switching transistor PWM signal, and the second switching transistor PWM signal is used to generate a drive signal that controls the second switching transistor to be turned on or off; and generate a third switching transistor PWM signal based on the fourth switching transistor PWM signal, where a level status of the third switching transistor PWM signal is opposite to a level status of the fourth switching transistor PWM signal, and the third switching transistor PWM signal is used to generate a drive signal that controls the third switching transistor to be turned on or off.

Based on a complementary relationship between the switching transistors, PWM signals corresponding to switching transistors that are complementary to each other may be generated, to reduce requirements for corresponding phase shift information and pulse-width information.

In some implementations, the DAB converter further includes a secondary-side half-bridge converter. The secondary-side half-bridge converter includes a second inductor, a second capacitor, a third capacitor, a fifth switching transistor, a sixth switching transistor, a seventh switching transistor, and an eighth switching transistor.

A first end of a secondary-side winding of the transformer is connected to a first end of the second inductor. A second end of the second inductor is connected to a drain of the sixth switching transistor and a drain of the seventh switching transistor. A source of the sixth switching transistor is connected to a source of the fifth switching transistor. A drain of the fifth switching transistor and a first end of the second capacitor are configured to connect to an output end of an alternating current power grid. A source of the seventh switching transistor is connected to a source of an eighth switching transistor. A drain of the eighth switching transistor and a second end of the third capacitor are configured to connect to an input end of the alternating current power grid. A second end of the secondary-side winding of the transformer is connected to a second end of the second capacitor and a first end of the third capacitor.

The MCU is specifically configured to: generate a second phase shift signal based on a second phase shift and a second carrier, where the second phase shift is a phase difference between a drive signal of the fifth switching transistor and a drive signal of the eighth switching transistor, when a second phase shift value is greater than or equal to a second carrier count value, a level of the second phase shift signal is set to high, otherwise, the level of the second phase shift signal is set to low, and a pulse-width length of the second phase shift signal is equal to a length of the second phase shift; and generate a second pulse-width signal based on a second pulse width and the second carrier, where the second pulse width is a pulse width of the drive signal of the fifth switching transistor, when a second pulse-width value is greater than or equal to the second carrier count value, a level of the second pulse-width signal is set to high, otherwise, the level of the second pulse-width signal is set to low, and a pulse-width length of the second pulse-width signal is equal to a length of the second pulse width.

The signal parser is specifically configured to: receive the second phase shift signal and the second pulse-width signal that are sent by the MCU, and generate PWM signals of two normally-on switching transistors and PWM signals of two complementary switching transistors based on a polarity of a voltage output by the alternating current power grid, where levels of the PWM signals of the two normally-on switching transistors are high levels, and a level status of a PWM signal of one complementary switching transistor in the PWM signals of the two complementary switching transistors is opposite to a level status of a PWM signal of the other complementary switching transistor.

In some implementations, the signal parser is specifically configured to:
when the polarity of the voltage output by the alternating current power grid is positive, generate a rising edge of a pulse of a fifth switching transistor PWM signal when a pulse of the second phase shift signal is at a falling edge, and generate a falling edge of the pulse of the fifth switching transistor PWM signal when a pulse width of the fifth switching transistor PWM signal is equal to a pulse width of the second pulse-width signal, where the fifth switching transistor PWM signal is used to generate a drive signal that controls the fifth switching transistor to be turned on or off; and generate a seventh switching transistor PWM signal based on the fifth switching transistor PWM signal, where a level status of the seventh switching transistor PWM signal is opposite to a level status of the fifth switching transistor PWM signal, and the seventh switching transistor PWM signal is used to generate a drive signal that controls the seventh switching transistor to be turned on or off; and
generate a sixth switching transistor PWM signal, where a level of the sixth switching transistor PWM signal is a high level, and the sixth switching transistor PWM signal is used to generate a drive signal that controls the sixth switching transistor to be turned on or off; and generate an eighth switching transistor PWM signal, where a level of the eighth switching transistor PWM signal is a high level, and the eighth switching transistor PWM signal is used to generate a drive signal that controls the eighth switching transistor to be turned on or off.

In some implementations, the signal parser is further configured to:
when the polarity of the voltage output by the alternating current power grid is negative, generate a rising edge of a pulse of a sixth switching transistor PWM signal when a pulse of the second phase shift signal is at a rising edge, and generate a falling edge of the pulse of the sixth switching transistor PWM signal when a pulse width of the sixth switching transistor PWM signal is equal to a pulse width of the second pulse-width signal, where the sixth switching transistor PWM signal is used to generate a drive signal that controls the sixth switching transistor to be turned on or off; and generate an eighth switching transistor PWM signal based on the sixth switching transistor PWM signal, where a level status of the eighth switching transistor PWM signal is opposite to a level status of the sixth switching transistor PWM signal, and the eighth switching transistor PWM signal is used to generate a drive signal that controls the eighth switching transistor to be turned on or off; and
generate a fifth switching transistor PWM signal, where a level of the fifth switching transistor PWM signal is a high level, and the fifth switching transistor PWM signal is used to generate a drive signal that controls the fifth switching transistor to be turned on or off; and generate a seventh switching transistor PWM signal, where a level of the seventh switching transistor PWM signal is a high level, and the seventh switching transistor PWM signal is used to generate a drive signal that controls the seventh switching transistor to be turned on or off.

The phase shift signal, the pulse-width signal, and the polarity of the alternating current power grid work together to control generation of the drive signals of the switching transistors in the secondary-side half-bridge converter, to better meet a requirement for electric energy conversion and ensure successful electric energy conversion.

In some implementations, a phase difference exists between the rising edge of the pulse of the first phase shift signal and the rising edge of the pulse of the second phase shift signal. The phase difference is equal to a third phase shift. The third phase shift is a phase difference between the drive signal of the first switching transistor and the drive signal of the fifth switching transistor.

In the power converter, a phase shift between different timers in the primary-side full-bridge converter and the secondary-side half-bridge converter is used, so that an additional phase shift control amount may be generated between two different phase shift signals. The phase shift control amount may be used to change a phase shift between correspondingly generated switching transistor PWM signals, to generate switching transistor drive signals having a phase difference between a primary-side transistor and a secondary-side transistor. This reduces a requirement for a peripheral timer resource and reduces costs of sending a PWM driver gating signal.

According to a second aspect, this application provides a control method for a power converter. The method includes:
generating a phase shift signal and a pulse-width signal, generating a rising edge of a pulse of a switching transistor PWM signal at a same moment of a rising edge of a pulse of the phase shift signal or at a same moment of a falling edge of a pulse of the phase shift signal, and generating a pulse-width length of the switching transistor PWM signal based on a pulse-width length of the pulse-width signal, where the pulse-width length of the switching transistor PWM signal is equal to the length of the pulse-width signal, and the switching transistor PWM signal is used to generate a drive signal that controls a switching transistor to be turned on or off.

In some implementations, the method is applied to a dual-active bridge DAB converter. The power converter is the dual-active bridge DAB converter. The DAB converter includes a primary-side full-bridge converter and a transformer. The primary-side full-bridge converter includes a first inductor, a first switching transistor, a second switching transistor, a third switching transistor, and a fourth switching transistor. The method includes:
generating a first phase shift signal based on a first phase shift and a first carrier, where the first phase shift is a phase difference between a drive signal of the first switching transistor and a drive signal of the fourth switching transistor, when a first phase shift value is greater than or equal to a first carrier count value, a level of the first phase shift signal is set to high, otherwise, the level of the first phase shift signal is set to low, and a pulse-width length of the first phase shift signal is equal to a length of the first phase shift; and generating a first pulse-width signal based on a first pulse width and the first carrier, where the first pulse width is a pulse width of the drive signal of the first switching transistor, when a first pulse-width value is greater than or equal to the first carrier count value, a level of the first pulse-width signal is set to high, otherwise, the level of the first pulse-width signal is set to low, and a pulse-width length of the first pulse-width signal is equal to a length of the first pulse width; and
generating a rising edge of a pulse of a first switching transistor PWM signal at a rising edge of a pulse of the first phase shift signal, and generating a falling edge of the pulse of the first switching transistor PWM signal when a pulse width of the first switching transistor PWM signal is equal to a pulse width of the first pulse-width signal, where the first switching transistor PWM signal is used to generate the drive signal that controls the first switching transistor to be turned on or off, a drain of the first switching transistor is connected to an output end of a direct current power supply through the first inductor, and a source of the first switching transistor is connected to both a drain of the second switching transistor and a first end of a primary-side winding of the transformer; and generating a rising edge of a pulse of a fourth switching transistor PWM signal at a falling edge of the pulse of the first phase shift signal, and generating a falling edge of the pulse of the fourth switching transistor PWM signal when a pulse width of the fourth switching transistor PWM signal is equal to the pulse width of the first pulse-width signal, where the fourth switching transistor PWM signal is used to generate the drive signal that controls the fourth switching transistor to be turned on or off, and a drain of the fourth switching transistor is connected to both a second end of the primary-side winding of the transformer and a source of the third switching transistor.

In some implementations, the method further includes:
generating a second switching transistor PWM signal based on the first switching transistor PWM signal, where a level status of the second switching transistor PWM signal is opposite to a level status of the first switching transistor PWM signal, and the second switching transistor PWM signal is used to generate a drive signal that controls the second switching transistor to be turned on or off; and generating a third switching transistor PWM signal based on the fourth switching transistor PWM signal, where a level status of the third switching transistor PWM signal is opposite to a level status of the fourth switching transistor PWM signal, and the third switching transistor PWM signal is used to generate a drive signal that controls the third switching transistor to be turned on or off.

In some implementations, the DAB converter further includes a secondary-side half-bridge converter. The secondary-side half-bridge converter includes a second inductor, a second capacitor, a third capacitor, a fifth switching transistor, a sixth switching transistor, a seventh switching transistor, and an eighth switching transistor. The method includes:
generating a second phase shift signal based on a second phase shift and a second carrier, where the second phase shift is a phase difference between a drive signal of the fifth switching transistor and a drive signal of the eighth switching transistor, when a second phase shift value is greater than or equal to a second carrier count value, a level of the second phase shift signal is set to high, otherwise, the level of the second phase shift signal is set to low, and a pulse-width length of the second phase shift signal is equal to a length of the second phase shift; generating a second pulse-width signal based on a second pulse width and the second carrier, where the second pulse width is a pulse width of the drive signal of the fifth switching transistor, when a second pulse-width value is greater than or equal to the second carrier count value, a level of the second pulse-width signal is set to high, otherwise, the level of the second pulse-width signal is set to low, and a pulse-width length of the second pulse-width signal is equal to a length of the second pulse width; and
generating PWM signals of two normally-on switching transistors and PWM signals of two complementary switching transistors based on a polarity of a voltage output by an alternating current power grid, where levels of the PWM signals of the two normally-on switching transistors are high levels, and a level status of a PWM signal of one complementary switching transistor in the PWM signals of the two complementary switching transistors is opposite to a level status of a PWM signal of the other complementary switching transistor.

In some implementations, the generating PWM signals of two normally-on switching transistors and PWM signals of two complementary switching transistors based on a polarity of a voltage output by an alternating current power grid includes:
when the polarity of the voltage output by the alternating current power grid is positive, generating a rising edge of a pulse of a fifth switching transistor PWM signal when a pulse of the second phase shift signal is at a falling edge, and generating a falling edge of the pulse of the fifth switching transistor PWM signal when a pulse width of the fifth switching transistor PWM signal is equal to a pulse width of the second pulse-width signal, where the fifth switching transistor PWM signal is used to generate the drive signal that controls the fifth switching transistor to be turned on or off, a source of the fifth switching transistor is connected to a source of the sixth switching transistor, and a drain of the fifth switching transistor is connected to a first end of the second capacitor and an output end of the alternating current power grid; and generating a seventh switching transistor PWM signal based on the fifth switching transistor PWM signal, where a level status of the seventh switching transistor PWM signal is opposite to a level status of the fifth switching transistor PWM signal, the seventh switching transistor PWM signal is used to generate a drive signal that controls the seventh switching transistor to be turned on or off, a source of the seventh switching transistor is connected to a first end of a secondary-side winding of the transformer through the second inductor, the source of the seventh switching transistor is connected to a drain of the sixth switching transistor, and the source of the seventh switching transistor is connected to a source of the eighth switching transistor; and
generating a sixth switching transistor PWM signal, where a level of the sixth switching transistor PWM signal is a high level, and the sixth switching transistor PWM signal is used to generate a drive signal that controls the sixth switching transistor to be turned on or off; and generating an eighth switching transistor PWM signal, where a level of the eighth switching transistor PWM signal is a high level, the eighth switching transistor PWM signal is used to generate the drive signal that controls the eighth switching transistor to be turned on or off, and a drain of the eighth switching transistor is connected to a second end of the third capacitor and an input end of the alternating current power grid.

In some implementations, the generating PWM signals of two normally-on switching transistors and PWM signals of two complementary switching transistors based on a polarity of a voltage output by an alternating current power grid includes:
when the polarity of the voltage output by the alternating current power grid is negative, generating a rising edge of a pulse of a sixth switching transistor PWM signal when a pulse of the second phase shift signal is at a rising edge, and generating a falling edge of the pulse of the sixth switching transistor PWM signal when a pulse width of the sixth switching transistor PWM signal is equal to a pulse width of the second pulse-width signal, where the sixth switching transistor PWM signal is used to generate a drive signal that controls the sixth switching transistor to be turned on or off; and generating an eighth switching transistor PWM signal based on the sixth switching transistor PWM signal, where a level status of the eighth switching transistor PWM signal is opposite to a level status of the sixth switching transistor PWM signal, and the eighth switching transistor PWM signal is used to generate the drive signal that controls the eighth switching transistor to be turned on or off; and
generating a fifth switching transistor PWM signal, where a level of the fifth switching transistor PWM signal is a high level, and the fifth switching transistor PWM signal is used to generate the drive signal that controls the fifth switching transistor to be turned on or off; and generating a seventh switching transistor PWM signal, where a level of the seventh switching transistor PWM signal is a high level, and the seventh switching transistor PWM signal is used to generate a drive signal that controls the seventh switching transistor to be turned on or off.

In some implementations, the method further includes the following.

A phase difference exists between the rising edge of the pulse of the first phase shift signal and the rising edge of the pulse of the second phase shift signal. The phase difference is equal to a third phase shift. The third phase shift is a phase difference between the drive signal of the first switching transistor and the drive signal of the fifth switching transistor.

According to a third aspect, this application provides a micro-inverter, including the DAB converter in the first aspect. An input end of the inverter is configured to connect to a photovoltaic module. An output end of the inverter is configured to connect to a load.

In some implementations, a primary-side full-bridge converter in the DAB converter is configured to connect to the photovoltaic module. The primary-side full-bridge converter is configured to receive a direct current input by the photovoltaic module and convert the direct current into a high-frequency alternating current.

The MCU is specifically configured to: generate a first phase shift signal based on a first phase shift and a first carrier, where the first phase shift is a phase difference between a drive signal of a first switching transistor and a drive signal of a fourth switching transistor, when a first phase shift value is greater than or equal to a first carrier count value, a level of the first phase shift signal is set to high, otherwise, the level of the first phase shift signal is set to low, and a pulse-width length of the first phase shift signal is equal to a length of the first phase shift; and generate a first pulse-width signal based on a first pulse width and the first carrier, where the first pulse width is a pulse width of the drive signal of the first switching transistor, when a first pulse-width value is greater than or equal to the first carrier count value, a level of the first pulse-width signal is set to high, otherwise, the level of the first pulse-width signal is set to low, and a pulse-width length of the first pulse-width signal is equal to a length of the first pulse width.

The signal parser is specifically configured to: receive the first phase shift signal and the first pulse-width signal that are sent by the MCU; generate a rising edge of a pulse of a first switching transistor PWM signal when a pulse of the first phase shift signal is at a rising edge, and generate a falling edge of the pulse of the first switching transistor PWM signal when a pulse width of the first switching transistor PWM signal is equal to a pulse width of the first pulse-width signal, where the first switching transistor PWM signal is used to generate the drive signal that controls the first switching transistor to be turned on or off; and generate a rising edge of a pulse of a fourth switching transistor PWM signal when the pulse of the first phase shift signal is at a falling edge, and generate a falling edge of the pulse of the fourth switching transistor PWM signal when a pulse width of the fourth switching transistor PWM signal is equal to the pulse width of the first pulse-width signal, where the fourth switching transistor PWM signal is used to generate the drive signal that controls the fourth switching transistor to be turned on or off.

In some implementations, a secondary-side half-bridge converter in the DAB converter is configured to connect to the load. The secondary-side half-bridge converter is configured to convert the high-frequency alternating current into a low-frequency alternating current and output the low-frequency alternating current to the load.

The MCU is specifically configured to: generate a second phase shift signal based on a second phase shift and a second carrier, where the second phase shift is a phase difference between a drive signal of a fifth switching transistor and a drive signal of an eighth switching transistor, when a second phase shift value is greater than or equal to a second carrier count value, a level of the second phase shift signal is set to high, otherwise, the level of the second phase shift signal is set to low, and a pulse-width length of the second phase shift signal is equal to a length of the second phase shift; and generate a second pulse-width signal based on a second pulse width and the second carrier, where the second pulse width is a pulse width of the drive signal of the fifth switching transistor, when a second pulse-width value is greater than or equal to the second carrier count value, a level of the second pulse-width signal is set to high, otherwise, the level of the second pulse-width signal is set to low, and a pulse-width length of the second pulse-width signal is equal to a length of the second pulse width.

The signal parser is specifically configured to: receive the second phase shift signal and the second pulse-width signal that are sent by the MCU, and generate PWM signals of two normally-on switching transistors and PWM signals two complementary switching transistors based on a polarity of a voltage output by the load, where levels of the PWM signals of the two normally-on switching transistor are high levels, and a level status of a PWM signal of one complementary switching transistor in the PWM signals of the two complementary switching transistors is opposite to a level status of a PWM signal of the other complementary switching transistor.

### BRIEF DESCRIPTION OF DRAWINGS

The accompanying drawings herein are incorporated into this specification and constitute a part of this specification, show embodiments conforming to this application, and are used together with this specification to explain a principle of this application.
FIG. 1 is a diagram of implementing control of a drive signal in a bridge converter;
FIG. 2 is a diagram of a topology in which a DAB converter is used in a photovoltaic power generation micro-power conversion system;
FIG. 3 is a diagram of a control apparatus of a power converter according to an embodiment of this application;
FIG. 4 is a schematic flowchart of a control method for a power converter according to an embodiment of this application;
FIG. 5 is a diagram of generating a first phase shift signal and a first pulse-width signal based on a same carrier;
FIG. 6 is a diagram of generating a switching transistor PWM signal based on a first phase shift signal and a first pulse-width signal;
FIG. 7 is a diagram of generating a second phase shift signal and a second pulse-width signal based on a secondary-side bridge carrier;
FIG. 8 is a diagram of generating a switching transistor PWM signal based on a second phase shift signal and a second pulse-width signal; and
FIG. 9 is a diagram of generating an additional phase shift by adjusting a carrier phase shift of a timer according to an embodiment of this application.

The foregoing accompanying drawings show specific embodiments of this application, and more detailed descriptions are provided below. The accompanying drawings and text descriptions are not intended to limit the scope of the idea of this application in any manner, but are intended to describe the concept of this application to a person skilled in the art with reference to particular embodiments.

### DESCRIPTION OF EMBODIMENTS

Example embodiments are described in detail herein, and examples of the example embodiments are presented in the accompanying drawings. When the following description relates to the accompanying drawings, unless specified otherwise, same numbers in different accompanying drawings represent a same or similar element. Implementations described in the following example embodiments do not represent all implementations consistent with this application. On the contrary, the implementations are only examples of apparatuses and methods that are described in the appended claims in detail and that are consistent with some aspects of this application.

In the field of power electronics technologies, to improve power supply efficiency and reduce energy wastes, an apparatus, that is, a converter, for implementing electric energy conversion is usually needed. As a typical converter, a bridge converter may implement an electric energy conversion function by turning on and turning off a switching transistor on a bridge arm of the bridge converter.

In the bridge converter, to implement conversion from input electric energy to target output electric energy, the switching transistor on the bridge arm needs to be controlled to be turned on and off. This specifically relates to turn-on duration of the switching transistor, a switching frequency of the switching transistor, and a turn-on time difference between different switching transistors. The switching transistor is controlled by a drive signal to be turned on or off, and the turn-on duration of the switching transistor corresponds to duration of a high-level pulse in a waveform of the drive signal. One switching cycle of the switching transistor includes one turn-on and one turn-off of the switching transistor. Therefore, the switching cycle of the switching transistor corresponds to a time interval between two adjacent high levels in the waveform of the drive signal. The switching frequency of the switching transistor can be determined based on the switching cycle of the switching transistor, and the switching frequency of the switching transistor is equivalent to a turn-on frequency of the switching transistor. For the drive signal, the turn-on time difference between different switching transistors is a phase difference between rising edges or falling edges of waveforms of drive signals corresponding to the different switching transistors, and the phase difference is referred to as a phase shift.

It may be understood that, in the bridge converter, a conversion control signal is first generated by using a controller, a corresponding switching transistor PWM signal is generated based on the conversion control signal, and the switching transistor PWM signal is processed to generate a drive signal of a corresponding switching transistor. Therefore, phase shift control and frequency conversion control are performed on the conversion control signal, so that frequency conversion control and phase shift control can be performed on the switching transistor PWM signal, to control, by using a corresponding switching transistor drive signal, the switching transistor on the bridge arm to be turned on and off, so as to implement electric energy conversion.

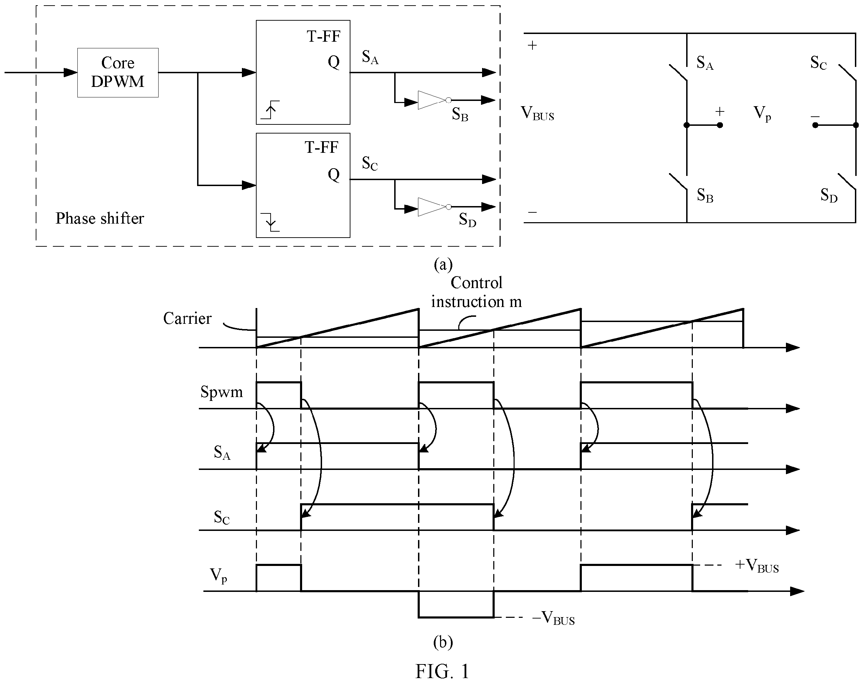

FIG. 1 is a diagram of implementing control of a switching transistor PWM signal in a bridge converter. As shown in (a) in FIG. 1, a phase shifter includes a core digital pulse width modulator (core DPWM) and a toggle flip-flop (toggle flip-flop, T-FF), and the phase shifter is equivalent to a control apparatus. According to an electric energy conversion requirement, a control instruction m is first generated, where the control instruction m includes corresponding phase shift information, the control instruction m is input to the phase shifter, and a corresponding value of m is compared with a carrier (carrier) generated in the core DPWM, to generate a PWM wave including the phase shift information. The waveform is referred to as a phase shift Spwm.

As shown in (b) in FIG. 1, generally, when m is greater than or equal to a value corresponding to the carrier, a level of the phase shift Spwm is set to high; and when m is less than the value corresponding to the carrier, the level of the phase shift Spwm level is set to low. A drive relationship between corresponding switching transistors is set based on a rising edge and a falling edge of the phase shift Spwm. The phase shift Spwm is input to the T-FF and parsed to obtain switching transistor PWM signals used to generate the switching transistor drive signals.

As shown in (b) in FIG. 1, a rising edge and a falling edge of a PWM signal of a switching transistor S_{A} are alternately generated at a rising edge of a phase-shift Spwm signal, and a rising edge and a falling edge of a PWM signal of a switching transistor Sc are alternately generated at a falling edge of the phase-shift Spwm signal. It may be understood that, in the bridge conversion circuit, the switching transistors S_{B} and S_{A} are complementary, and the switching transistors Sc and S_{D} are complementary. A complementary relationship indicates that when one of the two switching transistors that are complementary to each other is turned on, the other switching transistor is turned off. It should be noted that switching transistor PWM signals corresponding to the switching transistor S_{B} and the switching transistor S_{D} are not displayed in FIG. 1. To avoid that two complementary switching transistors are turned on at the same time, in a process of switching on and off of the switching transistors, "dead zone" time further needs to be added to avoid a straight-through state. Based on the foregoing switching transistor PWM signals, in a full-bridge conversion circuit, a voltage at a point Vₚ is shown in (b) in FIG. 1. When the switching transistor S_{A} and the switching transistor S_{D} are turned on, the switching transistor Sc and the switching transistor S_{B} are turned off, a current flows from S_{A} to S_{D}, and a voltage amplitude at the point Vₚ is positive. When the switching transistor S_{C} and the switching transistor S_{B} are turned on, the switching transistor S_{A} and the switching transistor S_{D} are turned off, the current flows from S_{c} to S_{B}, and the voltage amplitude at the Vₚ point is negative.

Waveforms of the switching transistor PWM signals corresponding to the switching transistor S_{A} and the switching transistor Sc shown in FIG. 1(b) are generated after parsing, and drive signals that are used for final control and that include the phase shift information may be generated based on the switching transistor PWM signals.

However, based on the foregoing drive signal control method, it can be learned that a value of the level of the phase-shift Spwm signal depends on a relationship between the control instruction m and the carrier, that is, a duty cycle of a waveform of the phase-shift Spwm signal depends on the control instruction m. Accordingly, a duty cycle of a switching transistor is coupled with the phase shift information, and the duty cycle of the switching transistor cannot be flexibly controlled. Therefore, when electric energy conversion in the bridge converter is implemented by using the foregoing converter control method, a target electric energy requirement on an output side may not be met.

The foregoing describes a control method for a switching transistor PWM signal in the bridge converter, and the method is also applicable to a dual-active bridge (dual-active bridge, DAB) converter. However, because the DAB converter includes a primary-side bridge and a secondary-side bridge, when phase shift control is needed, in addition to controlling a phase shift in the primary-side bridge and a phase shift in the secondary-side bridge, a phase shift between the primary-side bridge and the secondary-side bridge may also need to be controlled. In this case, more resources of sending a PWM driver gating signal used to generate the carrier are needed. This increases costs of the DAB converter.

To resolve the foregoing technical problem, this application provides a power converter and a control method, to improve a degree of freedom of control of a switching transistor PWM signal, implement flexible electric energy conversion, and reduce costs of sending a PWM driver gating signal.

A technical concept of this application is as follows: A pulse-width signal including a switching frequency and a phase shift signal are generated by using control amounts of a phase shift and a pulse width, a switching transistor PWM signal is correspondingly generated based on a rising edge and a falling edge of the phase shift signal, and a pulse width of the switching transistor PWM signal is determined based on the pulse-width signal. This improves a degree of freedom of signal control and implements flexible electric energy conversion.

Further, for the DAB converter, an additional phase shift is generated by adjusting a phase shift between a carrier corresponding to a primary-side bridge side and a carrier corresponding to a secondary-side bridge side, to reduce a quantity of needed resources of sending a PWM driver gating signal.

The following uses the DAB converter as a specific converter to describe in detail the technical solutions of this application and how the technical solutions of this application resolve the foregoing technical problem.

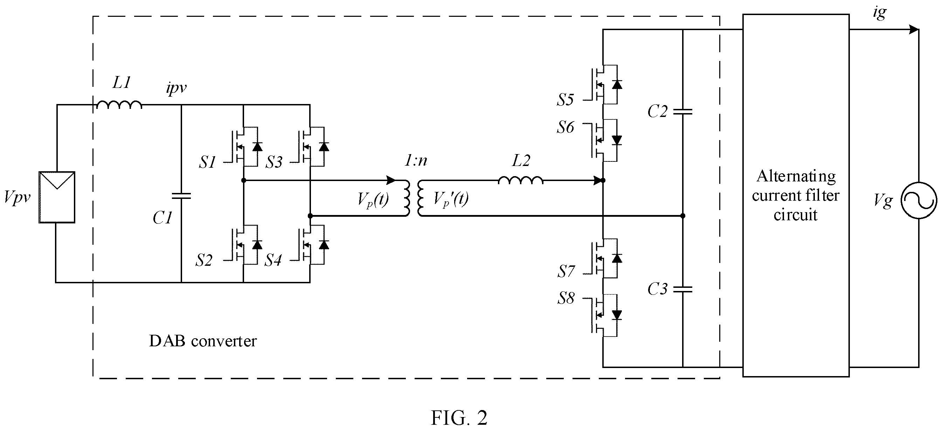

FIG. 2 is a diagram of a topology in which a DAB converter is used in a photovoltaic power generation micro-power conversion system. As shown in FIG. 2, the system includes a photovoltaic module, the DAB converter, an alternating current filter circuit, and a power grid.

The photovoltaic module PV serves as a direct current source, and is configured to provide a direct current. The DAB converter includes a primary-side full-bridge converter, a secondary-side half-bridge converter, a transformer, and a control apparatus.

The primary-side full-bridge converter includes a first inductor L1, a first capacitor C1, a first switching transistor S1, a second switching transistor S2, a third switching transistor S3, and a fourth switching transistor S4. A first end of the first inductor L 1 is configured to connect to an output end of a photovoltaic direct current power supply. A second end of the first inductor L1 is connected to a first end of the first capacitor C2, a drain of the first switching transistor S1, and a drain of the third switching transistor S3. A second end of the first capacitor C1, a source of the second switching transistor S2, and a source of the fourth switching transistor S4 are configured to connect to an input end of the direct current power supply. A first end of a primary-side winding of the transformer is connected to a source of the first switching transistor S1 and a drain of the second switching transistor S2. A second end of the primary-side winding of the transformer is connected to a source of the third switching transistor S3 and a drain of the fourth switching transistor S4. The primary-side full-bridge converter serves as a direct current-alternating current (direct current-alternating current, DC-AC) power converter, and is configured to convert the direct current provided by the photovoltaic module into a high-frequency alternating current.

The secondary-side half-bridge converter includes a second inductor L2, a second capacitor C2, a third capacitor C3, a fifth switching transistor S5, a sixth switching transistor S6, a seventh switching transistor S7, and an eighth switching transistor S8. A first end of a secondary-side winding of the transformer is connected to a first end of the second inductor L2. A second end of the second inductor L2 is connected to a drain of the sixth switching transistor S6 and a drain of the seventh switching transistor S7. A source of the sixth switching transistor S6 is connected to a source of the fifth switching transistor S5. A drain of the fifth switching transistor S5 and a first end of the second capacitor C2 are connected to an output end of an alternating current power grid through the alternating current filter circuit. A source of the seventh switching transistor S7 is connected to a source of the eighth switching transistor S8. A drain of the eighth switching transistor S8 and a second end of the third capacitor C3 are connected to an input end of the alternating current power grid through the alternating current filter circuit. A second end of the secondary-side winding of the transformer is connected to a second end of the second capacitor C2 and a first end of the third capacitor C3. The secondary-side half-bridge converter serves as an alternating current-alternating current (alternating current-alternating current, AC-AC) power converter, and converts the high-frequency alternating current into a low-frequency alternating current that is suitable for grid connection. The alternating current filter circuit is configured to filter out a high-frequency component in the low-frequency alternating current.

The control apparatus outputs PWM signals that control switching transistors on bridge arms of a primary-side bridge and a secondary-side bridge, and control the switching transistors to be turned on or off by using drive signals generated based on switching transistor PWM signals, to control the foregoing power conversion circuit. It should be noted that the control apparatus is not shown in FIG. 2.

In the control apparatus, the switching transistor PWM signals output by the control apparatus may be adjusted through frequency conversion and phase shift conversion of a control signal. The drive signals generated based on the switching transistor PWM signals are used to control the switching transistors in the DAB converter, to implement power conversion and ensure that the direct current provided by the direct current source is converted into the alternating current that is suitable for grid connection.

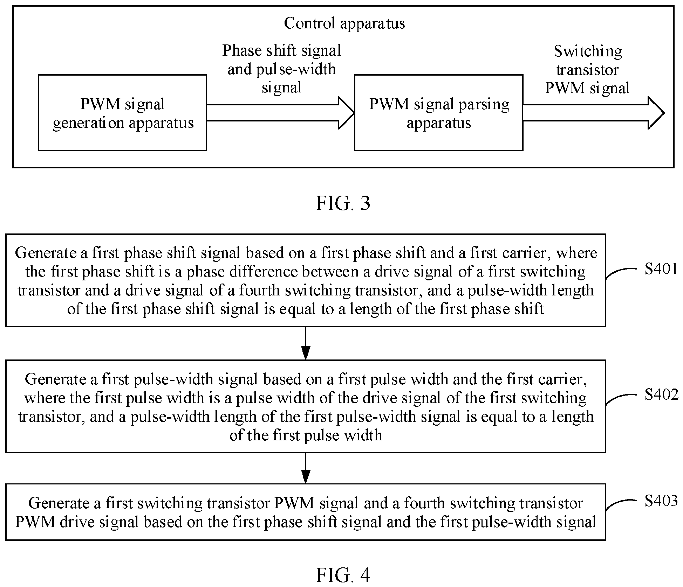

FIG. 3 is a diagram of a control apparatus of a power converter according to an embodiment of this application. As shown in FIG. 3, the control apparatus of the converter includes a PWM signal generation apparatus and a PWM signal parsing apparatus. The control apparatus may serve as the control apparatus in the system shown in FIG. 2.

The PWM signal generation apparatus is configured to generate a conversion control signal including waveform control information. The PWM signal generation apparatus first samples an external signal, and performs calculation processing on the external signal obtained through sampling to obtain the waveform control information. The waveform control information includes a first phase shift and a first pulse width. A PWM generator in the PWM signal generation apparatus generates a first phase shift signal including first phase shift information based on the first phase shift, and generates a first pulse-width signal including first pulse-width information based on the first pulse width.

In some implementations, the PWM signal generation apparatus is a microcontrol unit MCU (microcontroller unit, MCU), and the PWM generator is a peripheral timer in the MCU.

The PWM signal parsing apparatus is equivalent to a signal parser. The PWM signal parsing apparatus is configured to parse a phase shift signal and a pulse-width signal that include the waveform control information, to generate a switching transistor PWM signal in the power converter. The PWM signal parsing apparatus generates the switching transistor PWM signal based on the foregoing first phase shift signal and first pulse-width signal. The switching transistor PWM signal is used to generate a drive signal that controls a corresponding switching transistor to be turned on or off.

In some implementations, the PWM signal parsing apparatus is a complex programmable logic device (complex programmable logic device, CPLD) or a field-editable gate array (field-programmable gate array, FPGA).

The foregoing describes an example structure of the control apparatus in the power converter, and the following describes a control method that may be performed by the control apparatus in the power converter. FIG. 4 is a schematic flowchart of a control method for a power converter according to an embodiment of this application. As shown in FIG. 4, the control method provided in this embodiment may be applied to the photovoltaic power generation micro-power conversion system shown in FIG. 2. The control apparatus shown in FIG. 3 serves as the control apparatus in the system. The method may include S401 to S403.

S401: Generate a first phase shift signal based on a first phase shift and a first carrier, where the first phase shift is a phase difference between a drive signal of a first switching transistor and a drive signal of a fourth switching transistor, and a pulse-width length of the first phase shift signal is equal to a length of the first phase shift.

S402: Generate a first pulse-width signal based on a first pulse width and the first carrier, where the first pulse width is a pulse width of the drive signal of the first switching transistor, and a pulse-width length of the first pulse-width signal is equal to a length of the first pulse width.

There is no time sequence between step S401 and step S402. To implement electric energy conversion, a PWM signal generation apparatus first samples a voltage Vₚᵥ and a current Iₚᵥ of an input end in the photovoltaic power generation micro-power conversion system, an alternating current output voltage V_{g}, and a current I_{g}, and performs a data processing operation on the foregoing sampled signals, to obtain waveform control information. The waveform control information includes a switching frequency fs of a switching transistor, a primary-side phase shift ph1, a secondary-side phase shift ph2, a primary-side full-bridge pulse width duty1, and a secondary-side half-bridge pulse width duty2.

The switching frequency fs changes in a power grid frequency cycle, and a change range of the switching frequency fs is between 50 kHz and 1 MHz. The primary-side full-bridge pulse width duty1 and the secondary-side half-bridge pulse width duty2 are not greater than 50% of a switching cycle of the switching transistor. Specifically, sizes of dead zones selected for waveforms of drive signals corresponding to a primary-side full bridge and a secondary-side half bridge need to be further considered.

For ease of description, the following describes the control method provided in this application by using a converter corresponding to a primary-side bridge as an example.

It may be understood that the primary-side phase shift ph1 is equivalent to a first phase shift in the primary-side bridge, the primary-side full-bridge pulse width duty1 is equivalent to a first pulse width in the primary-side bridge, a switching transistor S1 is equivalent to a first switching transistor, and a switching transistor S4 is equivalent to a fourth switching transistor.

In steps S401 and S402, the first carrier is generated by a carrier generator in the PWM signal generation apparatus. The carrier generator is generally a peripheral timer in an MCU. A system frequency of the peripheral timer corresponds to a dominant frequency F of the MCU. In the timer, counting is implemented by using a counter. Each time one clock cycle 1/F passes, a count (cnt) value of the counter is increased by 1.

In some implementations, a counting cycle of the counter is obtained through calculation based on the system frequency F of the timer and the switching frequency fs of the switching transistor. The counting cycle is T=F/fs. To be specific, when the cnt value in the timer reaches T, the cnt value returns to zero, and counting is started again. Therefore, a carrier cycle generated by the timer based on the cnt value is T clock cycles, that is, the carrier cycle is 1/fs. This means that the carrier cycle is consistent with the switching cycle of the switching transistor, that is, a carrier frequency is the same as the switching frequency of the switching transistor.

The first phase shift signal and the first pulse-width signal are generated based on a same carrier, and only one timer is needed, so that costs of the control apparatus can be effectively reduced.

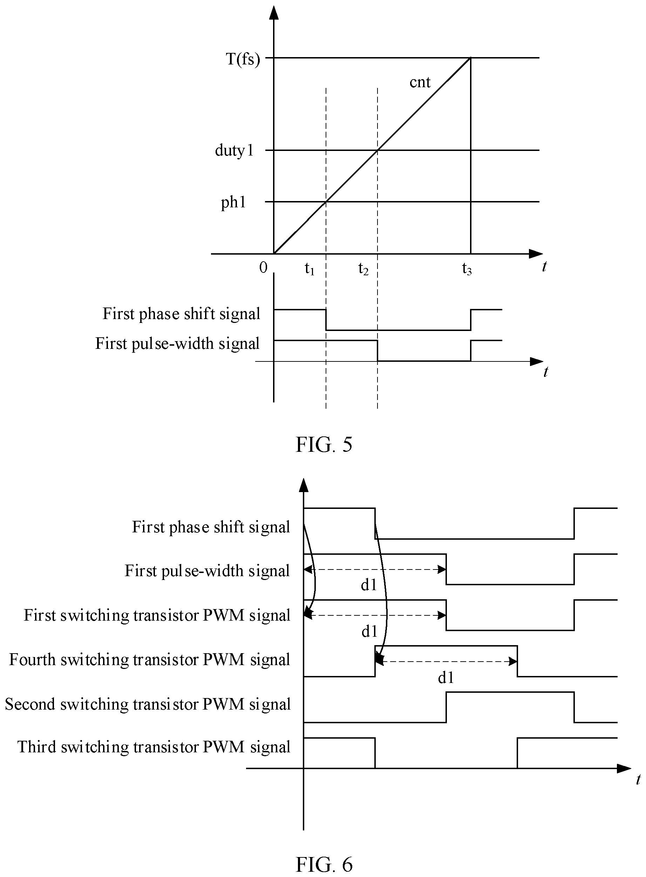

FIG. 5 is a diagram of generating the first phase shift signal and the first pulse-width signal based on the first carrier. As shown in FIG. 5, in the control method provided in this application, the first phase shift signal is generated based on the first phase shift ph1 and the carrier, and the first pulse-width signal is generated based on the first pulse width duty1 and the carrier. In an example, the first phase shift ph1 is compared with a carrier cnt value. When a value of the first phase shift ph1 is greater than or equal to the cnt value, a level of the first phase shift signal is set to high. When the value of the first phase shift ph1 is less than the cnt value, the level of the first phase shift signal is set to low. As shown in FIG. 5, at moments 0 to t₁, the value of the first phase shift ph1 is greater than or equal to the carrier cnt value; and at moments t₁ to t₃, the value of the first phase shift ph1 is less than the carrier cnt value. Therefore, the first phase shift signal generated based on the first phase shift ph1 is at a high level at the moments 0 to t₁, and is at a low level at the moments t₁ to t₃. In this example, a pulse width of the first phase shift signal is equal to the first phase shift ph1. This means that the first phase shift signal includes information about the first phase shift ph1. A cycle of the first phase shift signal is consistent with the carrier cycle. The first phase shift signal can indicate switching frequencies of the first switching transistor S1 and the fourth switching transistor S4.

Similarly, in an example, the first pulse width duty1 is compared with the carrier cnt value. When a value of the first pulse width duty1 is greater than or equal to the cnt value, a level of the first pulse-width signal is set to high. When the value of the first pulse width duty1 is less than the cnt value, the level of the first pulse-width signal is set to low. As shown in FIG. 5, at moments 0 to t₂, the value of the first pulse width duty1 is greater than or equal to the carrier cnt value; and at moments t₂ to t₃, the value of the first pulse width duty 1 is less than the carrier cnt value. Therefore, the first pulse-width signal is at a high level at the moments 0 to t₂, and is at a low level at the moments t₂ to t₃. In this example, a pulse width of the first pulse-width signal is equal to the first pulse width duty1. This means that the first pulse-width signal includes information about the first pulse width duty1. The first pulse-width signal can indicate the switching frequencies of the first switching transistor S1 and the fourth switching transistor S4.

S403: Generate a first switching transistor PWM signal and a fourth switching transistor PWM signal based on the first phase shift signal and the first pulse-width signal.

In this step, the PWM signal parsing apparatus separately parses the first phase shift signal and the first pulse-width signal to obtain phase shift information included in the first phase shift signal and pulse width information included in the first pulse-width signal, to generate the first switching transistor PWM signal and the fourth switching transistor PWM signal. The first switching transistor PWM signal is used to generate the drive signal that controls the first switching transistor S1 to be turned on or off. The fourth switching transistor PWM signal is used to generate the drive signal that controls the fourth switching transistor S4 to be turned on or off.

As shown in FIG. 6, in the control method provided in this application, a rising edge of a pulse of the first switching transistor PWM signal may be generated at a rising edge of a pulse of the first phase shift signal, and the first switching transistor S1 is driven to be turned on at a rising edge of a pulse of the drive signal generated based on the first switching transistor PWM signal.

When the pulse width d1 of the first pulse-width signal is equal to the first pulse width duty1, because the first pulse width duty1 indicates the pulse width d1 of a switching transistor drive signal, when a pulse width of the first switching transistor PWM signal is equal to the pulse width d1 of the first pulse-width signal, a falling edge of the pulse of the first switching transistor PWM signal is generated, and the first switching transistor S1 is driven to be turned off at a falling edge of the pulse of the drive signal generated based on the first switching transistor PWM signal.

When the pulse width of the first phase shift signal is equal to the first phase shift ph1, because the first phase shift ph1 is the phase difference between the drive signal of the first switching transistor S1 and the drive signal of the fourth switching transistor S4, a rising edge of a pulse of the fourth switching transistor PWM signal is generated at a falling edge of the pulse of the first phase shift signal. In this case, a phase difference between the rising edge of the pulse of the fourth switching transistor PWM signal and the rising edge of the pulse of the first switching transistor PWM signal is the first phase shift ph1. The fourth switching transistor S4 is driven to be turned on at a rising edge of a pulse of the drive signal generated based on the fourth switching transistor PWM signal.

When a pulse width d1 of the fourth switching transistor PWM signal is equal to the first pulse width duty1, because the first pulse width duty1 indicates the pulse width d1 of the switching transistor drive signal, when the pulse width of the fourth switching transistor PWM signal is equal to the pulse width d1 of the first pulse-width signal, a falling edge of the pulse of the fourth switching transistor PWM signal is generated, and the fourth switching transistor S4 is driven to be turned off at a falling edge of the pulse of the drive signal generated based on the fourth switching transistor PWM signal.

It may be understood that, in the system shown in FIG. 2, the switching transistors S1 to S4 form the primary-side full bridge. The first switching transistor S1 and the second switching transistor S2 are complementary, and the third switching transistor S3 and the fourth switching transistor S4 are complementary. Therefore, a waveform of a second switching transistor PWM signal corresponding to the second switching transistor S2 and a waveform of the first switching transistor PWM signal are complementary, and a waveform of a third switching transistor PWM signal and a waveform of the fourth switching transistor PWM signal are complementary. A complementary relationship between the waveforms of the signals indicates that level statuses of two signals that are complementary to each other are opposite. As shown in FIG. 6, when the waveform of the first switching transistor PWM signal is at a high level, the waveform of the second switching transistor PWM signal is at a low level. When the waveform of the first switching transistor PWM signal is at a low level, the waveform of the second switching transistor PWM signal is at a high level. Similarly, the third switching transistor PWM signal corresponding to the switching transistor S3 may be obtained based on a level status of the waveform of the fourth switching transistor PWM signal.

It should be noted that dead zones exist between turn-on and turn-off of the switching transistor S1 and the switching transistor S2, and between turn-on and turn-off of the switching transistor S3 and the switching transistor S4. The dead zones are omitted in FIG. 6 and are not drawn.

In the foregoing example, the control method provided in this application is described by using the primary-side full-bridge converter as an example. For a secondary-side half-bridge converter, drive signals of the switching transistors S5 to S8 may be generated by using the same control method. However, considering that in the system shown in FIG. 2, the secondary-side half-bridge converter of the DAB converter is connected to the alternating current power grid, the secondary-side half-bridge converter further needs to be controlled, based on a polarity of a voltage of the power grid, to generate a corresponding switching transistor PWM signal.

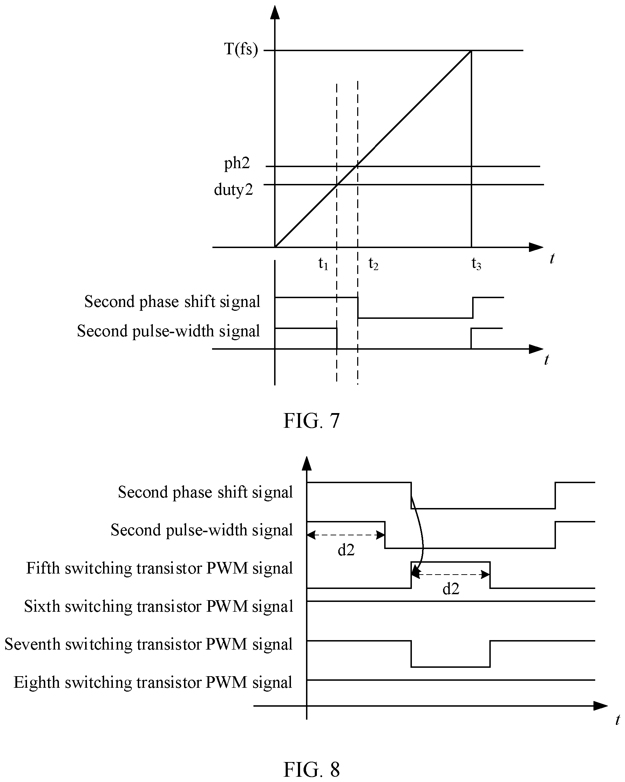

It may be understood that the secondary-side phase shift ph2 is equivalent to a second phase shift, and the secondary-side half-bridge pulse width duty2 is equivalent to a second pulse width. Therefore, a timer in a secondary-side bridge generates a secondary-side bridge carrier in a manner consistent with a manner of generating the first phase shift signal and the first pulse-width signal shown in FIG. 5. As shown in FIG. 7, a second phase shift signal may be generated based on the second phase shift ph2 and the secondary-side bridge carrier, and a second pulse-width signal may be generated based on the second pulse width duty2 and the secondary-side bridge carrier. A specific process is not described herein again.

A fifth switching transistor PWM signal and an eighth switching transistor PWM signal may be generated based on the second phase shift signal and the second pulse-width signal. In an example, as shown in FIG. 8, a rising edge of a pulse of the fifth switching transistor PWM signal is generated at a falling edge of the second phase shift signal, and the fifth switching transistor S5 is controlled to be turned on at a rising edge of a pulse of a drive signal generated based on the fifth switching transistor PWM signal.

When a pulse width d2 of the second pulse-width signal is equal to the second pulse width duty2, because the second pulse width duty2 indicates a pulse width d2 of a switching transistor drive signal in the secondary-side bridge, when a pulse width of the fifth switching transistor PWM signal is equal to the pulse width d2 of the second pulse-width signal, a falling edge of the pulse of the fifth switching transistor PWM signal is generated, and the fifth switching transistor S5 is driven to be turned off at a falling edge of the pulse of the drive signal generated based on the fifth switching transistor PWM signal.

A seventh switching transistor PWM signal corresponding to the seventh switching transistor S7 may be determined based on a complementary relationship between the seventh switching transistor S7 and the fifth switching transistor S5. When an amplitude the voltage of the power grid is positive, the fifth switching transistor PWM signal and the seventh switching transistor PWM signal are generated in the foregoing manner. The sixth switching transistor S6 and the eighth switching transistor S8 remain in a normally-on state, that is, waveforms of a sixth switching transistor PWM signal and an eighth switching transistor PWM signal remain at a high level.

When the amplitude of the voltage of the power grid is negative, the sixth switching transistor PWM signal and the eighth switching transistor PWM signal may be generated in the foregoing manner. For example, a rising edge of a pulse of the sixth switching transistor PWM signal is generated at a rising edge of the second phase shift signal, and the switching transistor S6 is controlled to be turned on at a rising edge of a pulse of a drive signal generated based on the sixth switching transistor PWM signal.

When a pulse width d2 of the second phase shift signal is equal to the second pulse width duty2, because the second pulse width duty2 indicates the pulse width d2 of the switching transistor drive signal in the secondary-side bridge, when a pulse width of the sixth switching transistor PWM signal is equal to the pulse width d2 of the second phase shift signal, a falling edge of the pulse of the sixth switching transistor PWM signal is generated, and the switching transistor S6 is driven to be turned off at a falling edge of the pulse of the drive signal generated based on the sixth switching transistor PWM signal.

The eighth switching transistor PWM signal is generated based on a complementary relationship between the sixth switching transistor S6 and the eighth switching transistor S8. When the amplitude of the voltage of the power grid is negative, the switching transistors S5 and S7 remain in a normally-on state, that is, waveforms of the fifth switching transistor PWM signal and the seventh switching transistor PWM signal remain at a high level.

It may be understood that a dead zone exists between turn-on and turn-off of the foregoing switching transistors that are complementary to each other. The dead zone is omitted in FIG. 8 and is not drawn.

The foregoing manner of controlling the drive signals of the switching transistors in the secondary-side bridge is divided into two stages of control. According to pre-stage control, a PWM signal that can indicate the phase shift information and the pulse-width information is parsed, to generate switching PWM signals of the switching transistors in the secondary-side bridge. According to post-stage control, based on the pre-stage control, the switching PWM signals of the switching transistors in the secondary-side bridge are further adjusted based on the amplitude and polarity of the voltage of the power grid.

In this embodiment, a signal that is used to control generation of a switching transistor PWM signal is divided into a phase shift signal and a pulse-width signal, to implement decoupling control of a pulse width and a phase shift, improve a degree of freedom of waveform control of a drive signal, and implement flexible electric energy conversion.

In the foregoing embodiment, because a phase shift is needed in both the primary-side bridge and the secondary-side bridge in the DAB converter, actually, the primary-side bridge and the secondary-side bridge each need a peripheral timer to generate a corresponding primary-side conversion control signal and a corresponding secondary-side conversion control signal respectively. To implement power conversion, the phase shift between the primary-side bridge and the secondary-side bridge may also need to be implemented. Therefore, a higher requirement is imposed on a peripheral timer resource in the control apparatus.

For the foregoing case, this application further provides a control method for a power converter, to handle with a scenario in which the timer resource is insufficient. Specifically, a phase difference exists between the rising edge of the pulse of the first phase shift signal and the rising edge of the pulse of the second phase shift signal. The phase difference is equal to a third phase shift. The third phase shift is a phase difference between the drive signal of the first switching transistor S1 and the drive signal of the fifth switching transistor S5.

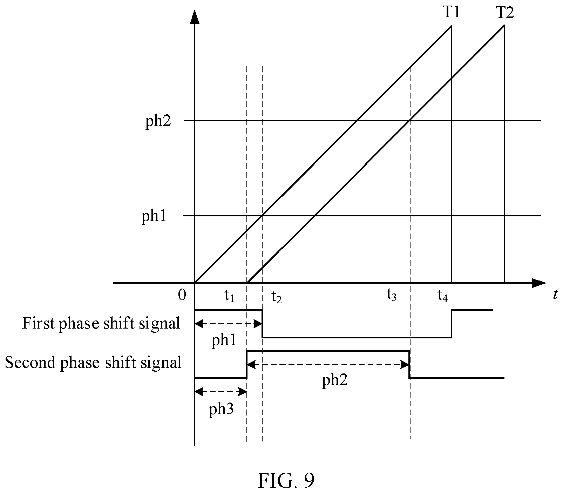

The first phase shift signal and the second phase shift signal are respectively generated based on the first carrier and the second carrier. A phase difference between the first phase shift signal and the second phase shift signal may be adjusted by adjusting a phase difference between the first carrier and the second carrier. FIG. 9 is a diagram of generating an additional phase shift by adjusting a carrier phase shift of a timer according to an embodiment of this application. As shown in FIG. 9, the waveform control information includes the first phase shift ph1 and the second phase shift ph2. A primary-side timer generates the first carrier T1. At the moments 0 to t₁, the value of the first phase shift ph1 is greater than or equal to a value corresponding to the first carrier T1; and at moments t₁ to t₄, the value of the first phase shift ph1 is less than the value corresponding to the first carrier T1. Therefore, the first phase shift signal generated based on the first phase shift ph1 is at a high level at the moments 0 to t₁, and is at a low level at the moments t₁ to t₄. The pulse width of the first phase shift signal is equal to the first phase shift ph1.

The first switching transistor S1 is a switching transistor in the primary-side full-bridge converter, and the fifth switching transistor S5 is a switching transistor in the secondary-side half-bridge converter. The phase difference between the drive signals of the first switching transistor S1 and the fifth switching transistor S5 is equivalent to a phase difference between the primary-side bridge and the secondary-side bridge. The third phase shift ph3 is used to implement the phase shift between the primary-side bridge and the secondary-side bridge.

A secondary-side timer generates the second carrier T2 based on the third phase shift ph3. The phase difference between the second carrier T2 and the first carrier T1 is equal to the third phase shift ph3. The second phase shift signal is generated based on the second phase shift ph2, the third phase shift ph3, and the second carrier T2. As shown in FIG. 9, at moments 0 to t₃, a value of the second phase shift ph2 is greater than or equal to a value corresponding to the second carrier T2; and at the moments t₃ to t₄, the value of the second phase shift ph2 is less than the value corresponding to the second carrier T2. Therefore, the generated second phase shift signal is at a low level at the moments t₃ to t₄. At the moments 0 to t₁, because the phase difference between the second carrier T2 and the first carrier T1 is the third phase shift ph3, and actually, a value of the second carrier T2, which is used as a comparing object of the second phase shift ph2 at this place, is larger than that of the second phase shift ph2, a correspondingly generated second phase shift wave is at a low level at the moments 0 to t₁, and is at a high level at the moments t₁ to t₃. The pulse width of the second phase shift signal is equal to the second phase shift ph2. A phase difference between the rising edge of the pulse of the first phase shift signal and the rising edge of the pulse of the second phase shift signal is equal to the third phase shift ph3.

It can be learned from the embodiment in FIG. 4 that, in the control method provided in this application, the pulse rising edge of the first switching transistor PWM signal is generated at the rising edge of the pulse of the first phase shift signal, and the rising edge of the pulse of the fifth switching transistor PWM signal is generated at the rising edge of the pulse of the second phase shift signal. Because the phase difference between the rising edge of the pulse of the second phase shift signal and the rising edge of the pulse of the first phase shift signal is equal to the third phase shift ph3, a phase difference between the rising edge of the pulse of the fifth switching transistor PWM signal and the rising edge of the pulse of the first switching transistor PWM signal is equal to the third phase shift ph3.

Accordingly, the phase difference between the drive signal of the fifth switching transistor S5 generated based on the fifth switching transistor PWM signal and the drive signal of the first switching transistor S1 generated based on the first switching transistor PWM signal is equal to the third phase shift ph3. This means that, in the control method in this application, phase shift control between the primary-side bridge and the secondary-side bridge is implemented by adjusting a phase shift between carriers.

In this embodiment, a phase shift between different timers is used, so that an additional phase shift control amount may be generated between two different phase shift signals. The phase shift control amount may be used to change a phase shift between correspondingly generated switching transistor PWM signals, to generate switching transistor drive signals having a phase difference between a primary-side transistor and a secondary-side transistor. This reduces a requirement for a peripheral timer resource and reduces costs of sending a PWM driver gating signal.

In the foregoing embodiment, the control method for the converter is applied to the photovoltaic power generation micro-power conversion system, and is essentially used to adjust the drive signals used to control the switching transistors in the DAB converter. In the system shown in FIG. 2, t the primary side of the DAB converter is a full-bridge conversion circuit, and the secondary side of the DAB converter is a half-bridge conversion circuit. For the DAB converter, the secondary-side bridge may also be a full-bridge conversion circuit. After a resonant cavity is added, the DAB converter may also serve as a resonant converter. The control method for the converter provided in this application is also applicable to the foregoing scenario.

In addition, in the system shown in FIG. 2, the DAB converter is used as a photovoltaic micro-inverter to implement DC-AC conversion. When the DAB converter serves as an AC-DC converter or a DC-DC converter, the control method for the converter provided in this application may also be used to control a drive signal of a switching transistor in the DAB converter, to meet an electric energy conversion requirement.

A person skilled in the art can easily figure out another implementation solution of this application after considering this specification and practicing the invention that is disclosed herein. This application is intended to cover any variations, functions, or adaptive changes of this application. These variations, functions, or adaptive changes comply with general principles of this application, and include common knowledge or a commonly used technical means in this technical field that is not disclosed in this application. This specification and the embodiments are merely considered as examples, and the actual scope of this application are indicated by the following claims.

It should be understood that this application is not limited to the accurate structures that are described above and that are shown in the accompanying drawings, and modifications and changes may be made without departing from the scope of this application. The scope of this application is limited only by the appended claims.

## Claims

1. A power converter, wherein the power converter comprises a power conversion circuit and a controller;
the power conversion circuit comprises at least one power switching transistor;
the controller is configured to generate a switching transistor pulse-width modulation (pulse-width modulation, PWM) signal that controls the at least one power switching transistor, and the controller comprises an microcontroller unit (microcontroller unit, MCU) and a signal parser;
the MCU is configured to generate a phase shift signal and a pulse-width signal; and
the signal parser is configured to: receive the phase shift signal and the pulse-width signal that are sent by the MCU, generate a rising edge of a pulse of the switching transistor PWM signal at a same moment of a rising edge of a pulse of the phase shift signal or at a same moment of a falling edge of a pulse of the phase shift signal, and generate a pulse-width length of the switching transistor PWM signal based on a pulse-width length of the pulse-width signal, wherein the pulse-width length of the switching transistor PWM signal is equal to the pulse-width length of the pulse-width signal, and the switching transistor PWM signal is used to generate a drive signal that controls the switching transistor to be turned on or off.

2. The power converter according to claim 1, wherein the generating a rising edge of a pulse of the switching transistor PWM signal at a same moment of a rising edge of a pulse of the phase shift signal or at a same moment of a falling edge of a pulse of the phase shift signal comprises:
in a same cycle, when a level status of the phase shift signal changes from a low level to a high level, a level status of the switching transistor PWM signal changes from a low level to a high level; or when a level status of the phase shift signal changes from a high level to a low level, a level status of the switching transistor PWM signal changes from a low level to a high level; and
the generating a pulse-width length of the switching transistor PWM signal based on a pulse-width length of the pulse-width signal, wherein the pulse-width length of the switching transistor PWM signal is equal to the pulse-width length of the pulse-width signal comprises:
in a same cycle, when high-level duration of the switching transistor PWM signal is equal to the pulse-width length of the pulse-width signal, the level status of the switching transistor PWM signal changes from the high level to the low level.

3. The power converter according to claim 2, wherein the power converter comprises a first switching transistor, a second switching transistor, a third switching transistor, and a fourth switching transistor;
a drain of the first switching transistor is connected to both an output end of a direct current power supply and a drain of the third switching transistor, a source of the first switching transistor is connected to a drain of the second switching transistor, a source of the third switching transistor, and a drain of the fourth switching transistor, and a source of the second switching transistor and a source of the fourth switching transistor are connected to an input end of the direct current power supply;
the MCU is configured to generate a first phase shift signal and a first pulse-width signal; and
the signal parser is configured to: receive the first phase shift signal and the first pulse-width signal that are sent by the MCU, generate a rising edge of a pulse of a first switching transistor PWM signal when a pulse of the first phase shift signal is at a rising edge, and generate a falling edge of the pulse of the first switching transistor PWM signal when a pulse width of the first switching transistor PWM signal is equal to a pulse width of the first pulse-width signal, wherein the first switching transistor PWM signal is used to generate a drive signal that controls the first switching transistor to be turned on or off; and
generate a rising edge of a pulse of a fourth switching transistor PWM signal when the pulse of the first phase shift signal is at a falling edge, and generate a falling edge of the pulse of the fourth switching transistor PWM signal when a pulse width of the fourth switching transistor PWM signal is equal to the pulse width of the first pulse-width signal, wherein the fourth switching transistor PWM signal is used to generate a drive signal that controls the fourth switching transistor to be turned on or off.

4. The power converter according to claim 3, wherein the power converter is a dual-active bridge DAB converter, the DAB converter comprises a primary-side full-bridge converter and a transformer, and the primary-side full-bridge converter comprises a first inductor, a first capacitor, the first switching transistor, the second switching transistor, the third switching transistor, and the fourth switching transistor;
a first end of the first inductor is configured to connect to the output end of the direct current power supply, a second end of the first inductor is connected to a first end of the first capacitor, the drain of the first switching transistor, and the drain of the third switching transistor, a second end of the first capacitor is connected to the input end of the direct current power supply, a first end of a primary-side winding of the transformer is connected to the source of the first switching transistor and the drain of the second switching transistor, and a second end of the primary-side winding of the transformer is connected to the source of the third switching transistor and the drain of the fourth switching transistor; and
the signal parser is further configured to:
generate a second switching transistor PWM signal based on the first switching transistor PWM signal, wherein a level status of the second switching transistor PWM signal is opposite to a level status of the first switching transistor PWM signal, and the second switching transistor PWM signal is used to generate a drive signal that controls the second switching transistor to be turned on or off; and
generate a third switching transistor PWM signal based on the fourth switching transistor PWM signal, wherein a level status of the third switching transistor PWM signal is opposite to a level status of the fourth switching transistor PWM signal, and the third switching transistor PWM signal is used to generate a drive signal that controls the third switching transistor to be turned on or off.

5. The power converter according to claim 3 or 4, wherein the DAB converter further comprises a secondary-side half-bridge converter, and the secondary-side half-bridge converter comprises a second inductor, a second capacitor, a third capacitor, a fifth switching transistor, a sixth switching transistor, a seventh switching transistor, and an eighth switching transistor;
a first end of a secondary-side winding of the transformer is connected to a first end of the second inductor, a second end of the second inductor is connected to a drain of the sixth switching transistor and a drain of the seventh switching transistor, a source of the sixth switching transistor is connected to a source of the fifth switching transistor, a drain of the fifth switching transistor and a first end of the second capacitor are configured to connect to an output end of an alternating current power grid, a source of the seventh switching transistor is connected to a source of the eighth switching transistor, a drain of the eighth switching transistor and a second end of the third capacitor are configured to connect to an input end of the alternating current power grid, and a second end of the secondary-side winding of the transformer is connected to a second end of the second capacitor and a first end of the third capacitor;
the MCU is specifically configured to generate a second phase shift signal and a second pulse-width signal; and
the signal parser is specifically configured to: receive the second phase shift signal and the second pulse-width signal that are sent by the MCU, and generate PWM signals of two normally-on switching transistors and PWM signals of two complementary switching transistors based on a polarity of a voltage of the alternating current power grid, wherein levels of the PWM signals of the two normally-on switching transistors are high levels, and a level status of a PWM signal of one complementary switching transistor in the PWM signals of the two complementary switching transistors is opposite to a level status of a PWM signal of the other complementary switching transistor.

6. The power converter according to claim 5, wherein the signal parser is specifically configured to:
when the polarity of the voltage output by the alternating current power grid is positive, generate a rising edge of a pulse of a fifth switching transistor PWM signal when a pulse of the second phase shift signal is at a falling edge, and generate a falling edge of the pulse of the fifth switching transistor PWM signal when a pulse width of the fifth switching transistor PWM signal is equal to a pulse width of the second pulse-width signal, wherein the fifth switching transistor PWM signal is used to generate a drive signal that controls the fifth switching transistor to be turned on or off;
generate a seventh switching transistor PWM signal based on the fifth switching transistor PWM signal, wherein a level status of the seventh switching transistor PWM signal is opposite to a level status of the fifth switching transistor PWM signal, and the seventh switching transistor PWM signal is used to generate a drive signal that controls the seventh switching transistor to be turned on or off;
generate a sixth switching transistor PWM signal, wherein a level of the sixth switching transistor PWM signal is a high level, and the sixth switching transistor PWM signal is used to generate a drive signal that controls the sixth switching transistor to be turned on or off; and
generate an eighth switching transistor PWM signal, wherein a level of the eighth switching transistor PWM signal is a high level, and the eighth switching transistor PWM signal is used to generate a drive signal that controls the eighth switching transistor to be turned on or off.

7. The power converter according to claim 5, wherein the signal parser is specifically configured to:
when the polarity of the voltage output by the alternating current power grid is negative, generate a rising edge of a pulse of a sixth switching transistor PWM signal when a pulse of the second phase shift signal is at a rising edge, and generate a falling edge of the pulse of the sixth switching transistor PWM signal when a pulse width of the sixth switching transistor PWM signal is equal to a pulse width of the second pulse-width signal, wherein the sixth switching transistor PWM signal is used to generate a drive signal that controls the sixth switching transistor to be turned on or off;
generate an eighth switching transistor PWM signal based on the sixth switching transistor PWM signal, wherein a level status of the eighth switching transistor PWM signal is opposite to a level status of the sixth switching transistor PWM signal, and the eighth switching transistor PWM signal is used to generate a drive signal that controls the eighth switching transistor to be turned on or off;
generate a fifth switching transistor PWM signal, wherein a level of the fifth switching transistor PWM signal is a high level, and the fifth switching transistor PWM signal is used to generate a drive signal that controls the fifth switching transistor to be turned on or off; and
generate a seventh switching transistor PWM signal, wherein a level of the seventh switching transistor PWM signal is a high level, and the seventh switching transistor PWM signal is used to generate a drive signal that controls the seventh switching transistor to be turned on or off.

8. The power converter according to any one of claims 5 to 7, wherein a phase difference exists between the rising edge of the pulse of the first phase shift signal and the rising edge of the pulse of the second phase shift signal, the phase difference is equal to a third phase shift, and the third phase shift is a phase difference between the drive signal of the first switching transistor and the drive signal of the fifth switching transistor.

9. A control method for a power converter, wherein the method comprises:
generating a phase shift signal and a pulse-width signal, generating a rising edge of a pulse of a switching transistor PWM signal at a same moment of a rising edge of a pulse of the phase shift signal or at a same moment of a falling edge of a pulse of the phase shift signal, and generating a pulse-width length of the switching transistor PWM signal based on a pulse-width length of the pulse-width signal, wherein the pulse-width length of the switching transistor PWM signal is equal to the pulse-width length of the pulse-width signal, and the switching transistor PWM signal is used to generate a drive signal that controls a power switching transistor to be turned on or off.

10. The method according to claim 9, wherein the method comprises:
generating a first phase shift signal and a first pulse-width signal;
generating a rising edge of a pulse of a first switching transistor PWM signal when a pulse of the first phase shift signal is at a rising edge, and generating a falling edge of the pulse of the first switching transistor PWM signal when a pulse width of the first switching transistor PWM signal is equal to a pulse width of the first pulse-width signal, wherein the first switching transistor PWM signal is used to generate a drive signal that controls a first switching transistor to be turned on or off, the power converter is a dual-active bridge DAB converter, the DAB converter comprises a primary-side full-bridge converter and a transformer, the primary-side full-bridge converter comprises a first inductor, the first switching transistor, a second switching transistor, a third switching transistor, and a fourth switching transistor, a drain of the first switching transistor is connected to an output end of a direct current power supply through the first inductor, and a source of the first switching transistor is connected to both a drain of the second switching transistor and a first end of a primary-side winding of the transformer; and
generating a rising edge of a pulse of a fourth switching transistor PWM signal when the pulse of the first phase shift signal is at a falling edge, and generating a falling edge of the pulse of the fourth switching transistor PWM signal when a pulse width of the fourth switching transistor PWM signal is equal to the pulse width of the first pulse-width signal, wherein the fourth switching transistor PWM signal is used to generate a drive signal that controls the fourth switching transistor to be turned on or off, and a drain of the fourth switching transistor is connected to both a second end of the primary-side winding of the transformer and a source of the third switching transistor, and
generating a second switching transistor PWM signal based on the first switching transistor PWM signal, wherein a level status of the second switching transistor PWM signal is opposite to a level status of the first switching transistor PWM signal, and the second switching transistor PWM signal is used to generate a drive signal that controls the second switching transistor to be turned on or off; and
generating a third switching transistor PWM signal based on the fourth switching transistor PWM signal, wherein a level status of the third switching transistor PWM signal is opposite to a level status of the fourth switching transistor PWM signal, and the third switching transistor PWM signal is used to generate a drive signal that controls the third switching transistor to be turned on or off.

11. The method according to claim 10, wherein the method comprises:
generating a second phase shift signal and a second pulse-width signal; and
generating PWM signals of two normally-on switching transistors and PWM signals of two complementary switching transistors based on a polarity of a voltage output by an alternating current power grid, wherein levels of the PWM signals of the two normally-on switching transistors are high levels, a level status of a PWM signal of one complementary switching transistor in the PWM signals of the two complementary switching transistors is opposite to a level status of a PWM signal of the other complementary switching transistor, the DAB converter further comprises a secondary-side half-bridge converter, the secondary-side half-bridge converter comprises a second inductor, a second capacitor, a third capacitor, a fifth switching transistor, a sixth switching transistor, a seventh switching transistor, and an eighth switching transistor, and the secondary-side half-bridge converter is connected to the alternating current power grid, and
wherein the generating PWM signals of two normally-on switching transistors and PWM signals of two complementary switching transistors based on a polarity of a voltage output by an alternating current power grid comprises:
when the polarity of the voltage output by the alternating current power grid is positive, generating a rising edge of a pulse of a fifth switching transistor PWM signal when a pulse of the second phase shift signal is at a falling edge, and generating a falling edge of the pulse of the fifth switching transistor PWM signal when a pulse width of the fifth switching transistor PWM signal is equal to a pulse width of the second pulse-width signal, wherein the fifth switching transistor PWM signal is used to generate a drive signal that controls the fifth switching transistor to be turned on or off, a source of the fifth switching transistor is connected to a source of the sixth switching transistor, and a drain of the fifth switching transistor is connected to a first end of the second capacitor and an output end of the alternating current power grid;
generating a seventh switching transistor PWM signal based on the fifth switching transistor PWM signal, wherein a level status of the seventh switching transistor PWM signal is opposite to a level status of the fifth switching transistor PWM signal, the seventh switching transistor PWM signal is used to generate a drive signal that controls the seventh switching transistor to be turned on or off, a source of the seventh switching transistor is connected to a first end of a secondary-side winding of the transformer through the second inductor, the source of the seventh switching transistor is connected to a drain of the sixth switching transistor, and the source of the seventh switching transistor is connected to a source of the eighth switching transistor;
generating a sixth switching transistor PWM signal, wherein a level of the sixth switching transistor PWM signal is a high level, and the sixth switching transistor PWM signal is used to generate a drive signal that controls the sixth switching transistor to be turned on or off; and
generating an eighth switching transistor PWM signal, wherein a level of the eighth switching transistor PWM signal is a high level, the eighth switching transistor PWM signal is used to generate a drive signal that controls the eighth switching transistor to be turned on or off, and a drain of the eighth switching transistor is connected to a second end of the third capacitor and an input end of the alternating current power grid.

12. The method according to claim 11, wherein the generating PWM signals of two normally-on switching transistors and PWM signals of two complementary switching transistors based on a polarity of a voltage output by an alternating current power grid comprises:
when the polarity of the voltage output by the alternating current power grid is negative, generating a rising edge of a pulse of a sixth switching transistor PWM signal when a pulse of the second phase shift signal is at a rising edge, and generating a falling edge of the pulse of the sixth switching transistor PWM signal when a pulse width of the sixth switching transistor PWM signal is equal to a pulse width of the second pulse-width signal, wherein the sixth switching transistor PWM signal is used to generate a drive signal that controls the sixth switching transistor to be turned on or off, a source of the sixth switching transistor is connected to a source of the fifth switching transistor, a drain of the sixth switching transistor is connected to a first end of a secondary-side winding of the transformer through the second inductor, and the drain of the sixth switching transistor is connected to a source of the seventh switching transistor;
generating an eighth switching transistor PWM signal based on the sixth switching transistor PWM signal, wherein a level status of the eighth switching transistor PWM signal is opposite to a level status of the sixth switching transistor PWM signal, the eighth switching transistor PWM signal is used to generate a drive signal that controls the eighth switching transistor to be turned on or off, a source of the eighth switching transistor is connected to the source of the seventh switching transistor, and a drain of the eighth switching transistor is connected to a second end of the third capacitor and an input end of the alternating current power grid;
generating a fifth switching transistor PWM signal, wherein a level of the fifth switching transistor PWM signal is a high level, the fifth switching transistor PWM signal is used to generate a drive signal that controls the fifth switching transistor to be on or off, and a drain of the fifth switching transistor is connected to a first end of the second capacitor and an output end of the alternating current power grid; and
generating a seventh switching transistor PWM signal, wherein a level of the seventh switching transistor PWM signal is a high level, and the seventh switching transistor PWM signal is used to generate a drive signal that controls the seventh switching transistor to be turned on or off.

13. The method according to any one of claims 10 to 12, wherein a phase difference between the rising edge of the pulse of the first phase shift signal and the rising edge of the pulse of the second phase shift signal is equal to a third phase shift, and the third phase shift is a phase difference between the drive signal of the first switching transistor and the drive signal of the fifth switching transistor.

14. The power converter according to claim 3, wherein the power converter comprises a micro-inverter, and the power conversion circuit comprises a dual-active bridge DAB converter, a primary-side full-bridge converter in the DAB converter is configured to connect to a photovoltaic module, the primary-side full-bridge converter is configured to receive a direct current input by the photovoltaic module and convert the direct current into a high-frequency alternating current, and the primary-side full-bridge converter comprises the first switching transistor, the second switching transistor, the third switching transistor, and the fourth switching transistor.

15. The power converter according to claim 14, wherein a secondary-side half-bridge converter in the DAB converter is configured to connect to a load, and the secondary-side half-bridge converter is configured to convert the high-frequency alternating current into a low-frequency alternating current and output the low-frequency alternating current to the load; and
the secondary-side half-bridge converter comprises a second inductor, a second capacitor, a third capacitor, a fifth switching transistor, a sixth switching transistor, a seventh switching transistor, and an eighth switching transistor;
a first end of a secondary-side winding of the transformer is connected to a first end of the second inductor, a second end of the second inductor is connected to a drain of the sixth switching transistor and a drain of the seventh switching transistor, a source of the sixth switching transistor is connected to a source of the fifth switching transistor, a drain of the fifth switching transistor and a first end of the second capacitor are configured to connect to an output end of an alternating current power grid, a source of the seventh switching transistor is connected to a source of the eighth switching transistor, a drain of the eighth switching transistor and a second end of the third capacitor are configured to connect to an input end of the alternating current power grid, and a second end of the secondary-side winding of the transformer is connected to a second end of the second capacitor and a first end of the third capacitor.
